(19) Europäisches Patentamt
European Patent Office
Office européen des brevets

(11) **EP 4 296 629 B1**

(12) **EUROPÄISCHE PATENTSCHRIFT**

(45) Veröffentlichungstag und Bekanntmachung des Hinweises auf die Patenterteilung:
**11.02.2026 Patentblatt 2026/07**

(21) Anmeldenummer: **23177604.8**

(22) Anmeldetag: **06.06.2023**

(51) Internationale Patentklassifikation (IPC):
**G01F 1/60** *(2006.01)* **B67C 3/20** *(2006.01)*
**G01F 1/58** *(2006.01)*

(52) Gemeinsame Patentklassifikation (CPC):
**G01F 1/588; B67C 3/20; G01F 1/60**

(54) **VERFAHREN ZUM BESTIMMEN EINES DURCHFLUSSES EINES MEDIUMS MIT EINEM MAGNETISCH-INDUKTIVEN DURCHFLUSSMESSGERÄT, VERFAHREN ZUM BETREIBEN EINER ABFÜLLANLAGE MIT EINEM MAGNETISCH-INDUKTIVEN DURCHFLUSSMESSGERÄT, MAGNETISCH-INDUKTIVES DURCHFLUSSMESSGERÄT UND ABFÜLLANLAGE MIT EINEM MAGNETISCH-INDUKTIVEN DURCHFLUSSMESSGERÄT**

METHOD FOR DETERMINING A FLOW OF A MEDIUM BY MEANS OF A MAGNETIC-INDUCTIVE FLOW METER, METHOD FOR OPERATING A FILLING SYSTEM WITH A MAGNETIC-INDUCTIVE FLOW METER, MAGNETIC-INDUCTIVE FLOW METER AND FILLING SYSTEM WITH A MAGNETIC-INDUCTIVE FLOW METER

PROCÉDÉ DE DÉTERMINATION D'UN DÉBIT D'UN MILIEU AVEC UN DÉBITMÈTRE MAGNÉTO-INDUCTIF, PROCÉDÉ DE FONCTIONNEMENT D'UNE INSTALLATION DE REMPLISSAGE AVEC UN DÉBITMÈTRE MAGNÉTO-INDUCTIF, APPAREIL DE MESURE DE DÉBIT MAGNÉTO-INDUCTIF ET INSTALLATION DE DOSAGE

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität: **20.06.2022 DE 102022115308**

(43) Veröffentlichungstag der Anmeldung:
**27.12.2023 Patentblatt 2023/52**

(73) Patentinhaber: **Krohne AG**
**4019 Basel (CH)**

(72) Erfinder: **den Haan, Arthur**
**2311 VH Leiden (NL)**

(74) Vertreter: **Gesthuysen Patentanwälte Partnerschaftsgesellschaft mbB**
**Huyssenallee 68**
**45128 Essen (DE)**

(56) Entgegenhaltungen:
**EP-B1- 1 363 108       EP-B1- 2 338 035**
**CN-A- 113 566 911       JP-B2- 6 429 510**
**US-A1- 2002 145 417**

**Beschreibung**

Die Erfindung betrifft ein Verfahren zum Bestimmen eines Durchflusses eines Mediums mit einem magnetisch-induktiven Durchflussmessgerät. Zum Bestimmen des Durchflusses weist das Durchflussmessgerät ein Messrohr, einen Magnetfeldgenerator, zwei Messelektroden und eine Steuerung auf.

Weiter wird ein Medium durch das Messrohr geströmt. Das Medium ist zur Bestimmung seines Durchflusses mit einem magnetisch-induktiven Durchflussmessgerät geeignet. Es weist somit insbesondere eine elektrische Leitfähigkeit auf. Der Durchfluss ist zum Beispiel ein Volumen- oder Massenstrom des Mediums durch das Messrohr pro Zeit.

Von der Steuerung werden in einem Verfahrensschritt Intervalle mit ersten Teilintervallen und zweiten Teilintervallen erzeugt und wird von der Steuerung mit dem Magnetfeldgenerator, also unter Verwendung des Magnetfeldgenerators, ein zwischen einer ersten Sollmagnetfeldstärke in den ersten Teilintervallen und einer zweiten Sollmagnetfeldstärke in den zweiten Teilintervallen alternierendes Magnetfeld erzeugt, sodass eine zwischen den zwei Messelektroden anliegende Messspannung in das im Messrohr strömende Medium induziert wird. Für gewöhnlich werden von der Steuerung die Intervalle fortlaufend erzeugt und grenzen die Teilintervalle, also die ersten und zweiten Teilintervalle, unmittelbar aneinander. Die Steuerung steuert den Magnetfeldgenerator im Betrieb des magnetisch-induktiven Durchflussmessgeräts an. Die Steuerung und der Magnetfeldgenerator sind entsprechend ausgebildet. Das bedeutet, dass die Steuerung dem Magnetfeldgenerator die Sollmagnetfeldstärke, also entweder die erste oder zweite Sollmagnetfeldstärke, vorgibt und der Magnetfeldgenerator dann im Medium im Messrohr das entsprechende Magnetfeld mit einer Magnetfeldstärke erzeugt.

Weiter wird von der Steuerung in einem Verfahrensschritt in jedem einer Messanzahl der Intervalle in den ersten Teilintervallen eine erste Messung mit einer Messpunktanzahl Messpunkte der Messspannung und in den zweiten Teilintervallen eine zweite Messung mit der Messpunktanzahl Messpunkte der Messspannung durchgeführt. Die Messanzahl und die Messpunktanzahl werden der Steuerung für gewöhnlich vorgegeben. Nach Durchführung dieses Verfahrensschritts liegt eine Messanzahl erste Messungen und eine Messanzahl zweite Messungen vor. Dabei weist jede der Messungen, also jede erste und jede zweite Messung, eine Messpunktanzahl Messpunkte auf. Jeder der Messpunkte ist ein Wert der Messspannung oder repräsentiert die Messspannung.

Von der Steuerung wird unter Verwendung der ersten Messung und der zweiten Messung in mindestens einem der Intervalle ein Durchfluss des Mediums durch das Messrohr bestimmt.

Weiter betrifft die Erfindung ein Verfahren zum Betreiben einer Abfüllanlage. Diese weist ein magnetisch-induktives Durchflussmessgerät, eine Abfüllvorrichtung und eine Steuerung auf. Das magnetisch-induktive Durchflussmessgerät weist ein Messrohr, einen Magnetfeldgenerator und zwei Messelektroden auf. Die Abfüllvorrichtung ist zum Abfüllen eines Mediums durch das Messrohr in Behälter ausgebildet.

Von der Steuerung wird das zuvor beschriebene Verfahren zum Bestimmen des Durchflusses ausgeführt und wird die Abfüllvorrichtung unter Verwendung des bestimmten Durchflusses des Mediums durch das Messrohr angesteuert, sodass ein Behälter mit einer vorgegebenen Menge des Mediums befüllt wird. Die Steuerung ist also zur Ausführung des Verfahrens ausgebildet. Die vorgegebene Menge wird für gewöhnlich der Steuerung vorgegeben.

Weiter betrifft die Erfindung ein magnetisch-induktives Durchflussmessgerät mit einem Messrohr, einem Magnetfeldgenerator, zwei Messelektroden und einer Steuerung. Die Steuerung ist ausgebildet, das zuvor beschriebene Verfahren zum Bestimmen des Durchflusses auszuführen.

Weiter betrifft die Erfindung eine Abfüllanlage mit einem magnetisch-induktiven Durchflussmessgerät, einer Abfüllvorrichtung und einer Steuerung. Das magnetisch-induktive Durchflussmessgerät weist ein Messrohr, einen Magnetfeldgenerator und zwei Messelektroden auf. Die Abfüllvorrichtung ist zum Abfüllen eines Mediums durch das Messrohr in Behälter ausgebildet. Die Steuerung ist ausgebildet, das zuvor beschriebene Verfahren zum Bestimmen des Durchflusses auszuführen. Insbesondere ist die Abfüllanlage ausgebildet, das zuvor beschriebene Verfahren zum Betreiben einer Abfüllanlage auszuführen.

Im Übrigen gelten die Ausführungen im Zusammenhang mit dem Verfahren zum Bestimmen des Durchflusses für das Verfahren zum Betreiben einer Abfüllanlage, für das Durchflussmessgerät und für die Abfüllanlage entsprechend.

Bei einem Übergang von einem der beiden Teilintervalle, also entweder einem der ersten oder der zweiten Teilintervalle, zum anderen der beiden Teilintervalle, also entweder einem der zweiten oder der ersten Teilintervalle, wird von der Steuerung auch von einer der beiden Sollmagnetfeldstärken, also entweder der ersten oder zweiten Sollmagnetfeldstärke, zu der anderen der beiden Sollmagnetfeldstärken, also der zweiten oder ersten Sollmagnetfeldstärke, gewechselt. Von dem Magnetfeldgenerator wird die vorgegebene Sollmagnetfeldstärke in eine Magnetfeldstärke des Magnetfelds im Medium im Messrohr umgesetzt, sodass das strömende Medium die an den beiden Messelektroden anliegende Messspannung in das strömende Medium induziert. Parasitäre Effekte bewirken, dass beim Wechsel zwischen einer der beiden Sollmagnetfeldstärken zur anderen der beiden Sollmagnetfeldstärken die Messspannung zunächst überschwingt und dann mit der Zeit asymptotisch auf eine konstante Messspannung abklingt. Dieses Überschwingen ist in den Messpunkten der ersten und zweiten Messungen enthalten und bewirkt einen Nullpunktfehler bei dem bestimmten Durchfluss. Ein parasitärer Effekt ist kapazitives Übersprechen.

Aus der EP 1 363 108 B1 ist ein Verfahren zur Bestimmung der Unsicherheit eines mit einem mit einer Feldfrequenz geschalteten magnetischen Gleichfeld arbeitenden magnetisch-induktiven Durchflussmessverfahrens bekannt.

Aufgabe der vorliegenden Erfindung ist deshalb die Angabe eines Verfahrens zum Bestimmen des Durchflusses, eines Verfahrens zum Betreiben der Abfüllanlage, eines magnetisch-induktiven Durchflussmessgeräts und einer Abfüllanlage der jeweils zuvor beschriebenen Art, bei welchen das aufgezeigte Problem zumindest abgemildert ist.

Die Aufgabe ist durch ein Verfahren zum Bestimmen eines Durchflusses mit den Merkmalen von Anspruch 1 gelöst. Das zuvor beschriebene Verfahren wird wie im Folgenden beschrieben modifiziert.

Zunächst werden von der Steuerung die folgenden Teilverfahrensschritte mindestens für eines der Intervalle ausgeführt:

In einem ersten Teilverfahrensschritt wird eine gemittelte erste Messung mit einem letzten gemittelten Messpunkt aus mehreren der ersten Messungen und eine gemittelte zweiten Messung mit einem letzten Messpunkt aus mehreren der zweiten Messungen bestimmt. Demnach weist die gemittelte erste Messung mehrere gemittelte Messpunkte auf, wobei ein letzter dieser gemittelten Messpunkte der letzte gemittelte Messpunkt ist. Auch die zweite gemittelte Messung weist mehrere gemittelte Messpunkte auf, wobei ein letzter der gemittelten Messpunkte der letzte gemittelte Messpunkt ist.

In einem zweiten Teilverfahrensschritt werden eine normierte erste Messung durch Subtrahieren des letzten gemittelten Messpunkts der gemittelten ersten Messung von der gemittelten ersten Messung und eine normierte zweite Messung durch Subtrahieren des letzten gemittelten Messpunkts der gemittelten zweiten Messung von der gemittelten zweiten Messung bestimmt. Somit wird von jedem der gemittelten Messpunkte jeweils der letzte gemittelte Messpunkt subtrahiert.

In einem dritten Teilverfahrensschritt werden eine gefilterte erste Messung durch Subtrahieren der normierten ersten Messung von der ersten Messung und eine gefilterte zweite Messung durch Subtrahieren der normierten zweiten Messung von der zweiten Messung bestimmt.

In einem weiteren Verfahrensschritt wird dann von der Steuerung der Durchfluss des Mediums durch das Messrohr unter Verwendung der mindestens für das eine Intervall bestimmten, gefilterten ersten Messung und der gefilterten zweiten Messung bestimmt.

Durch das erfindungsgemäße Verfahren wird der Nullpunktfehler zumindest reduziert.

In einer Ausgestaltung des Verfahrens wird von der Steuerung auch für das dem Intervall vorausgehende Intervall die gefilterte erste Messung und/oder die gefilterte zweite Messung bestimmt und der Durchfluss des Mediums unter zusätzlicher Verwendung der gefilterten ersten und/oder zweiten Messung bestimmt. Durch die zusätzliche Verwendung einer Messung aus dem dem Intervall vorausgehenden Intervall wird der Nullpunktfehler weiter reduziert. Diese Ausgestaltung des Verfahrens kann auf verschiedene alternative Weisen weiterhin gebildet werden.

In einer ersten Weiterbildung wird von der Steuerung auch für das dem Intervall vorausgehende Intervall die gefilterte erste Messung bestimmt. Weiter wird ein Pseudodurchflussmesswert bestimmt, indem jeweils ein Mittelwert aus der der gefilterten ersten Messung vorausgehenden gefilterten ersten Messung, der gefilterten ersten Messung und der gefilterten zweiten Messung bestimmt wird. Diese Mittelwerte werden dann addiert, wobei der Mittelwert der gefilterten zweiten Messung mit dem Faktor minus zwei gewichtet und die Summe durch vier dividiert wird. Die Mittelwerte sind zum Beispiel arithmetische Mittelwerte. Unter Verwendung des Pseudodurchflussmesswerts wird dann der Durchfluss des Mediums bestimmt. Um die richtige Richtung des Durchflusses zu erhalten, wird die Richtung des Magnetfelds berücksichtigt. Die Richtung des Magnetfelds korrespondiert mit der Richtung eines Stroms, welcher durch eine Spule fließt, welche das Magnetfeld erzugt. Somit kann auch anstatt der Richtung des Magnetfelds die Richtung des Stroms berücksichtigt werden.

In einer alternativen Weiterbildung wird von der Steuerung auch für das dem Intervall vorausgehende Intervall die gefilterte zweite Messung bestimmt. Dann wird ein Pseudodurchflussmesswert bestimmt, indem jeweils ein Mittelwert aus der der gefilterten zweiten Messung vorausgehenden gefilterten zweiten Messung, der gefilterten zweiten Messung und der gefilterten ersten Messung bestimmt wird. Diese Mittelwerte werden addiert, wobei der Mittelwert der gefilterten ersten Messung mit dem Faktor minus zwei gewichtet und die Summe durch vier dividiert wird. Die Mittelwerte sind zum Beispiel arithmetische Mittelwerte. Dann wird unter Verwendung des Pseudodurchflussmesswerts der Durchfluss des Mediums bestimmt. Um die richtige Richtung des Durchflusses zu erhalten, wird die Richtung des Magnetfelds berücksichtigt.

In einer weiteren Ausgestaltung wird zur Bestimmung der gemittelten ersten Messung und der gemittelten zweiten Messung jeweils ein arithmetischer oder ein kumulativer gleitender oder exponentieller gleitender Mittelwert bestimmt. Auch diese Bestimmung wird von der Steuerung ausgeführt.

In einer weiteren Ausgestaltung wird zur Bestimmung der gemittelten ersten Messung und der gemittelten zweiten Messung jeweils eine Kurvenanpassung mit einer Funktion an gemittelten Messpunkte der ersten Messung und an gemittelten Messpunkte der zweiten Messung durchgeführt und vorzugsweise weist die Funktion eine exponentielle Funktion auf.

In einer weiteren Ausgestaltung wird mit der Durchführung der ersten Messung in den ersten Teilintervallen und der zweiten Messung in den zweiten Teilintervallen jeweils nach einer Einschwingzeit begonnen. Die Einschwingzeit wird für gewöhnlich der Steuerung vorgegeben. Das Warten um die Einschwingzeit bewirkt, dass das Überschwingen schon teilweise abgeklungen ist, wodurch der Nullpunktfehler schon von sich aus reduziert ist.

In einer weiteren Ausgestaltung ist die erste Sollmagnetfeldstärke in den ersten Teilintervallen und die zweite Sollmagnetfeldstärke in den zweiten Teilintervallen über der Zeit jeweils konstant. Vorzugsweise haben die erste Sollmagnetfeldstärke und die zweite Sollmagnetfeldstärke den gleichen Betrag aber entgegengesetzte Vorzeichen. Dann hat die Sollmagnetfeldstärke über der Zeit einen rechteckigen Verlauf.

Die Aufgabe ist auch durch ein Verfahren zum Betreiben einer Abfüllanlage mit den Merkmalen von Anspruch 9 gelöst. Und zwar wird von der Steuerung eines der zuvor beschriebenen Verfahren zum Bestimmen des Durchflusses ausgeführt.

Weiter ist die Aufgabe auch durch ein magnetisch-induktives Durchflussmessgerät mit den Merkmalen von Anspruch 10 gelöst. Und zwar ist die Steuerung ausgebildet, eines der zuvor beschriebenen Verfahren zum Bestimmen des Durchflusses auszuführen.

Weiterhin ist die Aufgabe auch durch eine Abfüllanlage mit einem magnetisch-induktiven Durchflussmessgerät mit den Merkmalen von Anspruch 11 gelöst. Und zwar ist die Steuerung ausgebildet, eines der zuvor beschriebenen Verfahren auszuführen.

Im Übrigen gelten die Ausführungen im Zusammenhang mit dem Verfahren zum Bestimmen des Durchflusses für das Verfahren zum Betreiben einer Abfüllanlage, für das Durchflussmessgerät und für die Abfüllanlage entsprechend.

Im Einzelnen ist eine Vielzahl von Möglichkeiten gegeben, das Verfahren zum Bestimmen des Durchflusses, das Verfahren zum Betreiben einer Abfüllanlage, das magnetisch-induktive Durchflussmessgerät und die Abfüllanlage auszugestalten und weiterzubilden. Dazu wird verwiesen sowohl auf die den unabhängigen Ansprüchen nachgeordneten Ansprüche als auch auf die nachfolgende Beschreibung eines bevorzugten Ausführungsbeispiels in Verbindung mit der Zeichnung. In der Zeichnung zeigt

Figur 1    ein Ausführungsbeispiel einer Abfüllanlage,

Figur 2    einen Ablaufplan eines Ausführungsbeispiels eines Verfahrens zum Betreiben der Abfüllanlage,

Figur 3    Signale der Abfüllanlage beim Ausführen des Verfahrens über der Zeit t und

Figur 4    ein Ausführungsbeispiel eines magnetisch-induktiven Durchflussmessgeräts.

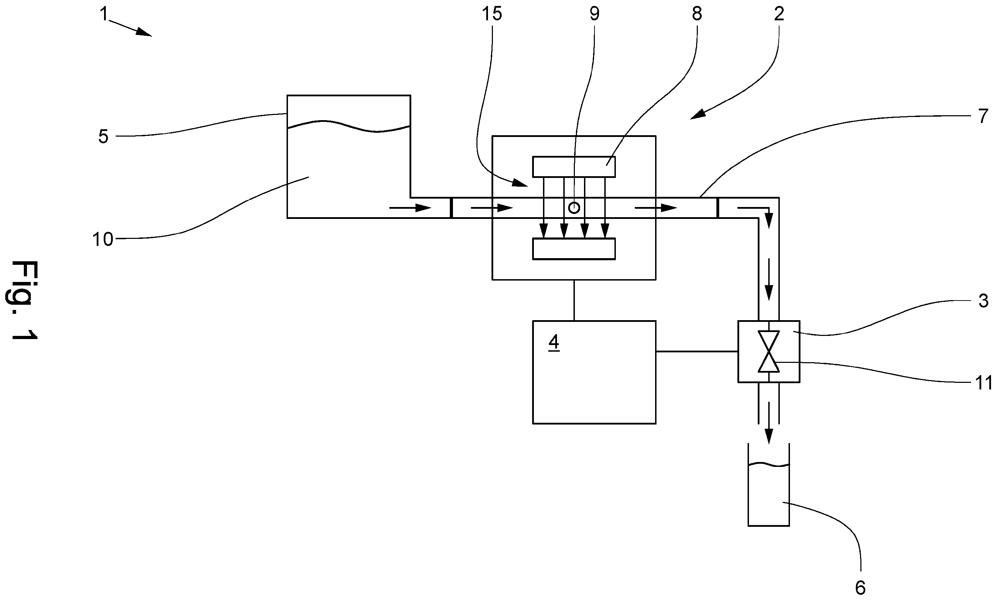

Figur 1 zeigt in einer abstrahierten Darstellung wesentliche Merkmale eines Ausführungsbeispiels einer Abfüllanlage 1 im Betrieb. Die Abfüllanlage 1 weist ein magnetisch-induktives Durchflussmessgerät 2, eine Abfüllvorrichtung 3, eine Steuerung 4, einen Vorratsbehälter 5 und einen Behälter 6 auf. Das Durchflussmessgerät 2 weist ein Messrohr 7, einen Magnetfeldgenerator 8 und zwei Messelektroden 9 auf, wobei in Figur 1 nur eine Messelektrode 9 sichtbar ist. Das Messrohr 7 ist mit der Abfüllvorrichtung 3 und dem Vorratsbehälter 5 durch weitere Rohre verbunden.

Die Abfüllvorrichtung 3 ist zum Abfüllen eines Mediums 10 durch das Messrohr 7 in den Behälter 6 ausgebildet. Die Steuerung 4 ist in diesem Ausführungsbeispiel nicht nur zur Steuerung des magnetisch-induktiven Durchflussmessgeräts 2, sondern auch zur Steuerung der Abfüllvorrichtung 3 ausgebildet. Die Abfüllvorrichtung 3 weist insbesondere ein Ventil 11 auf, welches von der Steuerung 4 ansteuerbar ist. Das Medium 10 ist im Vorratsbehälter 5 bevorratet. Wenn die Steuerung 4 das Ventil 11 der Abfüllvorrichtung 3 ansteuert, dann strömt das Medium 10 aus dem Vorratsbehälter 5 durch das Messrohr 7 und das Ventil 11 in den Behälter 6, welcher auf diese Weise befüllt wird. Das Medium 10 wird auf diese Weise durch das Messrohr 7 geströmt. Das Strömen des Mediums ist durch Pfeile im Messrohr 7 und den anderen Rohren angedeutet.

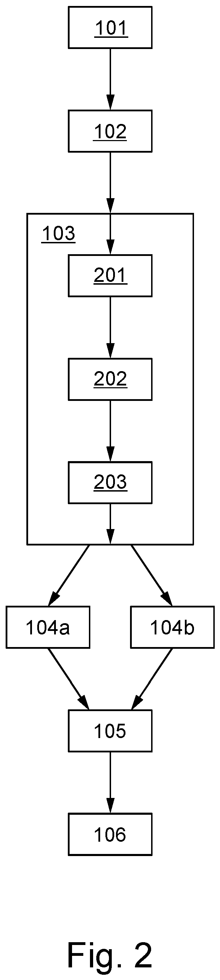

Im Betrieb führt die Abfüllanlage 1 ein Ausführungsbeispiel eines Verfahrens zum Betreiben der Abfüllanlage 1 aus. Figur 2 zeigt einen Ablaufplan dieses Verfahrens mit wesentlichen Verfahrensschritten.

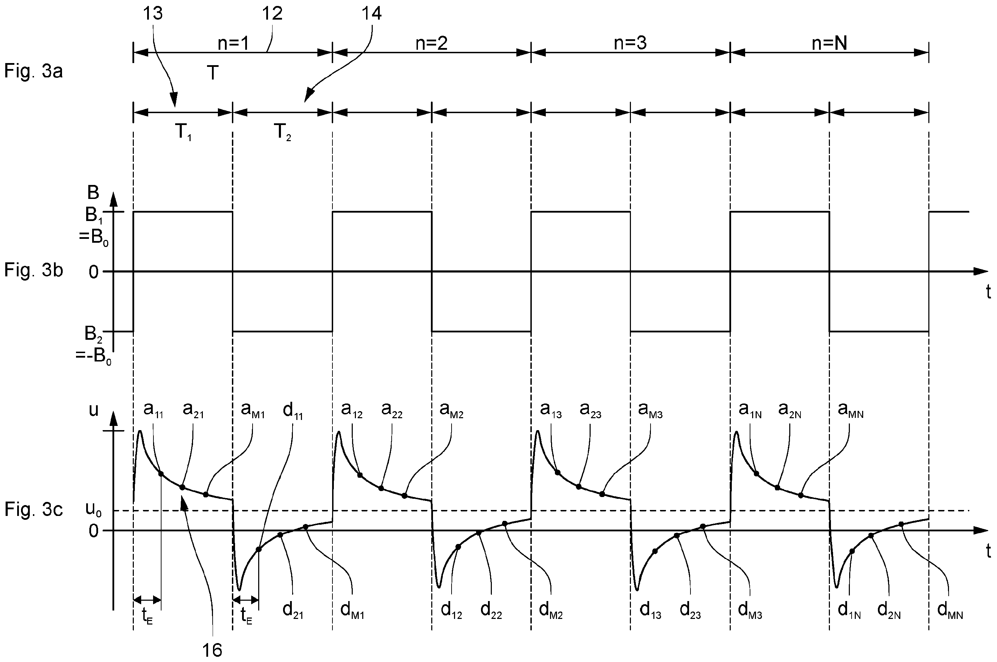

In einem ersten Verfahrensschritt 101 werden von der Steuerung 4 Intervalle 12, also n = 1, 2, 3, N, mit ersten Teilintervallen 13 und zweiten Teilintervallen 14 erzeugt, siehe Figur 3a. Zwischen n = 3 und n = N liegt eine beliebig vorgebbare Anzahl weiterer Intervalle 12, die nicht explizit aufgeführt sind, wobei N die Messanzahl und eine positive ganze Zahl ist.

Weiter wird mit dem Magnetfeldgenerator 8 ein zwischen einer ersten Sollmagnetfeldstärke $B=B_1$ in den ersten Teilintervallen 13 und einer zweiten Sollmagnetfeldstärke $B=B_2$ in den zweiten Teilintervallen 14 alternierendes Magnetfeld 15 erzeugt, siehe Figur 3b. Die erste Sollmagnetfeldstärke $B_1$ in ersten Teilintervallen 13 und die zweite Sollmag-netfeldstärke $B_2$ in den zweiten Teilintervallen 14 ist über der Zeit t jeweils konstant. Somit hat die Sollmagnetfeldstärke B über der Zeit t einen rechteckigen Verlauf.

Die erste Sollmagnetfeldstärke $B_1$, die zweite Sollmagnetfeldstärke $B_2$, eine Dauer T der Intervalle 12, eine Dauer $T_1$ der ersten Teilintervalle 13 und eine Dauer $T_2$ der zweiten Teilintervalle 14 sind der Steuerung 4 vorgegeben. Die Dauer der ersten Teilintervalle $T_1$ und die Dauer der zweiten Teilintervalle $T_2$ sind hier identisch. Auch sind die Beträge der ersten Sollmagnetfeldstärke $B_1$ und der zweiten Sollmagnetfeldstärke $B_2$ identisch, und zwar $B_0$.

Auf diese Weise wird eine zwischen den zwei Messelektroden 9 anliegende Messspannung u erzeugt, wenn das Medium 10 durch das Messrohr 7 strömt, siehe Figur 3c. Im vorliegenden Ausführungsbeispiel strömt das Medium mit einer konstanten Geschwindigkeit größer als Null im dargestellten Zeitbereich. Parasitäre Effekte bewirken, dass beim Wechsel zwischen den Sollmagnetfeldstärken $B_1$ und $B_2$ die Messspannung u zunächst überschwingt und dann mit der Zeit t asymptotisch auf eine konstante Messspannung $u_0$ hin abklingt. Das Überschwingen hat mehrere Ursachen. Eine Ursache ist Induktion des sich ändernden Magnetfelds 15 in Leitungen, welche mit den Elektroden 9 verbunden sind, und in das Medium 10.

In einem zweiten Verfahrensschritt 102 wird von der Steuerung 4 in jedem der N Intervalle 12, also n = 1, 2, 3, N, in den ersten Teilintervallen 13 eine erste Messung $\vec{a}_n$ mit einer Messpunktanzahl M Messpunkte 16 $\vec{a}_n = (a_{1n}, a_{2n}, a_{Mn})^T$ der Messspannung u und in den zweiten Teilintervallen 14 eine zweite Messung , mit der Messpunktanzahl M Messpunkte 16 $\vec{d}_n = (d_{1n}, d_{2n}, d_{Mn})^T$ der Messspannung u durchgeführt. M ist eine positive ganze Zahl und ist der Steuerung 4 vorgebbar.

Mit der Durchführung der ersten Messung in den ersten Teilintervallen 13 und der zweiten Messung $\vec{d}_n$ in den zweiten Teilintervallen 14 wird jeweils nach einer Einschwingzeit $t_E$ begonnen. In Fig. 3c ist das nur für das erste Intervall 12, also für n=1, eingezeichnet.

In einem dritten Verfahrensschritt 103 werden von der Steuerung 4 für eines der Intervalle 12, also n, die folgenden Teilverfahrensschritte ausgeführt:

In einem ersten Teilverfahrensschritt 201 wird zum einen eine gemittelte erste Messung $\overline{\vec{a}} = \left(\overline{a}_1, \overline{a}_2, \overline{a}_M\right)^T$ mit einem letzten gemittelten Messpunkt $\overline{a}_M$ aus den N ersten Messungen und zum anderen eine gemittelte zweite Messung $\overline{\vec{d}} = \left(\overline{a}_1, \overline{a}_2, \overline{a}_M\right)^T$ mit einem letzten gemittelten Messpunkt $\overline{d}_M$ aus den N zweiten Messungen bestimmt.

Und zwar wird von der Steuerung 4 zur Bestimmung der gemittelten ersten und der gemittelten zweiten Messung jeweils ein arithmetischer Mittelwert gemäß

$$\overline{\vec{a}} = \frac{1}{N} \sum_1^N \vec{a}_n = \frac{1}{N} \begin{pmatrix} a_{11} + a_{12} + a_{13} + a_{1N} \\ a_{21} + a_{22} + a_{23} + a_{2N} \\ a_{M1} + a_{M2} + a_{M3} + a_{MN} \end{pmatrix} = \begin{pmatrix} \overline{a}_1 \\ \overline{a}_2 \\ \overline{a}_M \end{pmatrix}$$

und

$$\overline{\vec{d}} = \frac{1}{N} \sum_1^N \vec{d}_n = \frac{1}{N} \begin{pmatrix} d_{11} + d_{12} + d_{13} + d_{1N} \\ d_{21} + d_{22} + d_{23} + d_{2N} \\ d_{M1} + d_{M2} + d_{M3} + d_{MN} \end{pmatrix} = \begin{pmatrix} \overline{d}_1 \\ \overline{d}_2 \\ \overline{d}_M \end{pmatrix}$$

bestimmt.

In einem zweiten Teilverfahrensschritt 202 wird zum einen eine normierte erste Messung $\vec{b}_n$ durch Subtrahieren des letzten gemittelten Messpunkts der gemittelten ersten Messung von der gemittelten ersten Messung $\vec{b}_n = \overline{\vec{a}} - \overline{a}_M \cdot \vec{J}_M$ und zum anderen eine normierte zweite Messung $\vec{e}_n$ durch Subtrahieren des letzten gemittelten Messpunkts der gemittelten zweiten Messung von der gemittelten zweiten Messung $\vec{e}_n = \overline{\vec{d}} - \overline{d}_M \cdot \vec{J}_M$ bestimmt. In den Formeln ist ein Einsvektor. Es ist also z. B. die normierte erste Messung

$$\vec{b}_n = \begin{pmatrix} \overline{a}_1 \\ \overline{a}_2 \\ \overline{a}_M \end{pmatrix} - \begin{pmatrix} \overline{a}_M \\ \overline{a}_M \\ \overline{a}_M \end{pmatrix} = \begin{pmatrix} \overline{a}_1 - \overline{a}_M \\ \overline{a}_2 - \overline{a}_M \\ 0 \end{pmatrix}.$$

In einem dritten Teilverfahrensschritt 203 wird zum einen eine gefilterte erste Messung $\vec{c}_n$ durch Subtrahieren der normierten ersten Messung von der ersten Messung $\vec{c}_n = \vec{a}_n - \vec{b}_n$ und zum anderen eine gefilterte zweite Messung $\vec{f}_n$, durch Subtrahieren der normierten zweiten Messung von der zweiten Messung $\vec{f}_n = \vec{d}_n - \vec{e}_n$ bestimmt. Es ist also z. B die gefilterte erste Messung

$$\vec{c}_n = \begin{pmatrix} a_{1n} \\ a_{2n} \\ a_{3n} \end{pmatrix} - \begin{pmatrix} \overline{a}_1 - \overline{a}_M \\ \overline{a}_2 - \overline{a}_M \\ 0 \end{pmatrix}.$$

In einer ersten Alternative eines vierten Verfahrensschritts 104a wird von der Steuerung 4 für das dem Intervall 12, also n, vorausgehenden Intervall 12, also n-1, die gefilterte erste Messung $\vec{c}_{n-1}$ bestimmt. Dazu wird der dritte Verfahrensschritt 103 für das Intervall n-1 für die erste Messung $\vec{a}_{n-1}$ entsprechend erneut ausgeführt.

Weiter wird dann ein Pseudodurchflussmesswert $g_n$ bestimmt, indem jeweils ein Mittelwert aus der der gefilterten ersten Messung $\vec{c}_n$ vorausgehenden gefilterten ersten Messung $\overline{\vec{c}}_{n-1}$, der gefilterten ersten Messung $\overline{\vec{c}}_n$ und der gefilterten zweiten Messung $\overline{\vec{f}}_n$ bestimmt wird, diese Mittelwerte addiert werden, wobei der Mittelwert der gefilterten zweiten Messung mit dem Faktor -2 gewichtet wird, und die Summe durch vier dividiert wird $g_n = \frac{1}{4}\left(\overline{\vec{c}}_{n-1} - 2\overline{\vec{f}}_n + \overline{\vec{c}}_n\right)$. Die Mittelwerte sind arithmetische Mittelwerte.

In einer zweiten Alternative eines vierten Verfahrensschritts 104b wird von der Steuerung 4 für das dem Intervall 12, also n, vorausgehenden Intervall 12, also n-1, die gefilterte zweite Messung $\vec{f}_{n-1}$ bestimmt. Dazu wird der dritte Verfahrensschritt 103 für das Intervall n-1 für die zweite Messung $\vec{d}_{n-1}$ entsprechend erneut ausgeführt.

Weiter wird dann ein Pseudodurchflussmesswert $g_n$ bestimmt, indem jeweils ein Mittelwert aus der der gefilterten zweiten Messung $\vec{f}_n$ vorausgehenden gefilterten zweiten Messung $\vec{f}_{n-1}$, der gefilterten zweiten Messung $\overline{\vec{f}}_n$ und der gefilterten ersten Messung $\overline{\vec{c}}_n$ bestimmt wird, diese Mittelwerte addiert werden, wobei der Mittelwert der gefilterten zweiten Messung mit dem Faktor -2 gewichtet wird, und die Summe durch vier dividiert wird $g_n = \frac{1}{4}\left(\overline{\vec{f}}_{n-1} - 2\overline{\vec{c}}_n + \overline{\vec{f}}_n\right)$. Die Mittelwerte sind arithmetische Mittelwerte.

In einem fünften Verfahrensschritt 105 wird dann von der Steuerung 4 unter Verwendung des Pseudodurchflussmesswerts $g_n$ der Durchfluss des Mediums 10 durch das Messrohr 7 bestimmt. Um die richtige Richtung des Durchflusses zu erhalten, wird die Richtung des Magnetfelds berücksichtigt.

In einem sechsten Verfahrensschritt 106 wird dann von der Steuerung 4 die Abfüllvorrichtung unter Verwendung des bestimmten Durchflusses des Mediums 10 durch das Messrohr 7 angesteuert, sodass der Behälter 6 mit einer vorgegebenen Menge des Mediums 10 befüllt wird. Die Menge ist der Steuerung 4 vorgegeben.

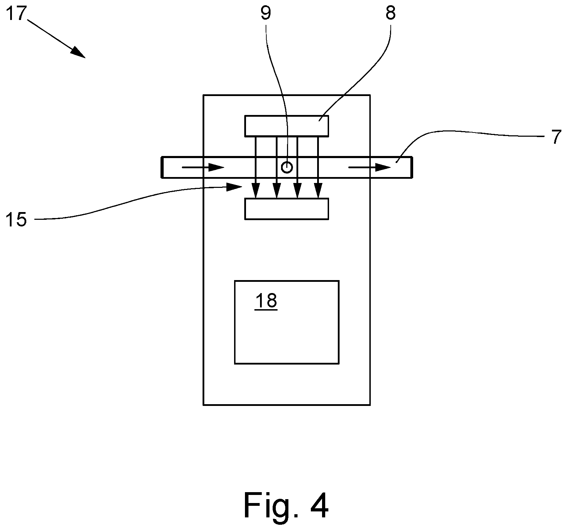

Figur 4 zeigt in einer abstrahierten Darstellung wesentliche Merkmale eines Ausführungsbeispiels weiteren magnetisch-induktiven Durchflussmessgeräts 17 . Das Durchflussmessgerät 17 weist wieder ein Messrohr 7, einen Magnetfeldgenerator 8 und zwei Messelektroden 9 auf, wobei auch in Figur 4 nur eine Messelektrode 9 sichtbar ist. Darüber hinaus weist das weitere magnetisch-induktive Durchflussmessgerät 17 eine eigene Steuerung 18 auf.

Die eigene Steuerung 18 unterscheidet sich von der Steuerung 4 der Abfüllanlage 1 durch die fehlende Ausbildung zur Steuerung der Abfüllvorrichtung 3. Die eigene Steuerung 18 ist ausgebildet, ein Verfahren mit dem zuvor beschriebenen ersten, zweiten, dritten, vierten und fünften Verfahrensschritt auszuführen und führt dieses Verfahren im Betrieb auch aus.

Das weitere magnetisch-induktive Durchflussmessgerät 17 kann auch in der zuvor beschriebenen Abfüllanlage 1 eingesetzt werden, wobei das weitere magnetisch-induktive Durchflussmessgerät 17 die eigene Steuerung 18 und die Abfüllvorrichtung 3 die Steuerung 4 ausweist. Die Steuerungen sind dann zur Kommunikation untereinander ausgebildet, sodass das zuvor beschriebene Verfahren ausführbar ist und im Betrieb ausgeführt wird.

$\vec{b}_n$     n-te normierte erste Messung

$\vec{c}_n$     n-te gefilterte erste Messung

$\vec{d}_n$     n-te zweite Messung

$\overline{\vec{d}}$     gemittelte zweite Messung

$\vec{e}_n$     n-te normierte zweite Messung

$\vec{f}_n$     n-te gefilterte zweite Messung

$B_1$     erste Sollmagnetfeldstärke

$B_2$     zweite Sollmagnetfeldstärke

u     Messspannung
N     Messanzahl
M     Messpunktzahl

**Patentansprüche**

1. Verfahren zum Bestimmen eines Durchflusses eines Mediums (10) mit einem magnetisch-induktiven Durchflussmessgerät (2, 17),

    wobei das Durchflussmessgerät (2, 17) ein Messrohr (7), einen Magnetfeldgenerator (8), zwei Messelektroden (9) und eine Steuerung (4, 18) aufweist,
    wobei ein Medium (10) durch das Messrohr (7) geströmt wird,
    wobei von der Steuerung (4, 18) Intervalle (12) mit ersten Teilintervallen (13) und zweiten Teilintervallen (14) erzeugt werden und mit dem Magnetfeldgenerator (8) ein zwischen einer ersten Sollmagnetfeldstärke ($B_1$) in den ersten Teilintervallen (13) und einer zweiten Sollmagnetfeldstärke ($B_2$) in den zweiten Teilintervallen (14) alternierendes Magnetfeld (15) erzeugt wird, sodass eine zwischen den zwei Messelektroden (9) anliegende Messspannung (u) in das im Messrohr (7) strömende Medium (10) induziert wird,
    wobei von der Steuerung (4, 18) in jedem einer Messanzahl (N) der Intervalle (12) in den ersten Teilintervallen (13) eine erste Messung ($\overline{a_n}$) mit einer Messpunktanzahl (M) Messpunkten der Messspannung (u) und in den zweiten Teilintervallen (14) eine zweite Messung ($\overline{d_n}$) mit der Messpunktanzahl (M) Messpunkten der Messspannung (u) durchgeführt wird,
    wobei von der Steuerung (4, 18) die folgenden Verfahrensschritte mindestens für eines der Intervalle (12) ausgeführt werden:

        - Bestimmen einer gemittelten ersten Messung ( $\overline{\overline{a}}$ ) mit einem letzten gemittelten Messpunkt ($\overline{\overline{a_M}}$) aus mehreren der ersten Messungen und Bestimmen einer gemittelten zweiten Messung ( $\overline{\overline{d}}$ ) mit einem letzten gemittelten Messpunkt ($\overline{\overline{d_M}}$) aus mehreren der zweiten Messungen,
        - Bestimmen einer normierten ersten Messung ($\overline{b_n}$) durch Subtrahieren des letzten gemittelten Messpunkts der gemittelten ersten Messung von der gemittelten ersten Messung und bestimmen einer normierten zweiten Messung ($\overline{e_n}$) durch Subtrahieren des letzten gemittelten Messpunkts der gemittelten zweiten Messung von der gemittelten zweiten Messung und
        - Bestimmen einer gefilterten ersten Messung ($\overline{c_n}$) durch Subtrahieren der normierten ersten Messung von der ersten Messung und Bestimmen einer gefilterten zweiten Messung ($\overline{f_n}$) durch Subtrahieren der normierten zweiten Messung von der zweiten Messung,

    und wobei von der Steuerung (4, 18) ein Durchfluss des Mediums (10) durch das Messrohr (7) unter Verwendung der mindestens für das eine Intervall (12) bestimmten gefilterten ersten Messungen ($\overline{c_n}$) und der gefilterten zweiten Messungen ($\overline{f_n}$) bestimmt wird.

2. Verfahren nach Anspruch 1, wobei von der Steuerung (4, 18) auch für das dem Intervall (12) vorausgehende Intervall (12) die gefilterte erste Messung ($\overline{c_{n-1}}$) und/oder gefilterte zweite Messung ($\overline{f_{n-1}}$) bestimmt und der Durchfluss des Mediums (10) unter zusätzlicher Verwendung der gefilterten ersten und/oder zweiten Messung bestimmt wird.

3. Verfahren nach Anspruch 2, wobei von der Steuerung (4, 18) auch für das dem Intervall (12) vorausgehende Intervall (12) die gefilterte erste Messung ($\overline{c_{n-1}}$) bestimmt wird, wobei ein Pseudodurchflussmesswert ($g_n$) bestimmt wird, indem jeweils ein Mittelwert aus der der gefilterten ersten Messung ($\overline{c_n}$) vorausgehenden gefilterten ersten Messung ( $\overset{\prime}{\overline{c}}_{n-1}$ ), der gefilterten ersten Messung ( $\overline{c}_n$ ) und der gefilterten zweiten Messung ( $\overline{\overline{f}}_n$ ) bestimmt wird, diese Mittelwerte addiert werden, wobei der Mittelwert der gefilterten zweiten Messung mit dem Faktor minus zwei gewichtet wird, und die Summe durch vier dividiert wird, und wobei unter Verwendung des Pseudodurchflussmesswerts ($g_n$) der Durchfluss des Mediums (10) bestimmt wird.

4. Verfahren nach Anspruch 2, wobei von der Steuerung auch für das dem Intervall (12) vorausgehende Intervall (12) die gefilterte zweite Messung ($\overline{f_{n-1}}$) bestimmt wird, wobei ein Pseudodurchflussmesswert ($g_n$) bestimmt wird, indem jeweils ein Mittelwert aus der der gefilterten zweiten Messung ($\overline{f_n}$) vorausgehenden gefilterten zweiten Messung (

$\overline{\overline{f}}_{n-1}$ ), der gefilterten zweiten Messung ( $\overline{\overline{f}}_n$ ) und der gefilterten ersten Messung ( $\overline{\overline{c}}_n$ ) bestimmt wird, diese Mittelwerte addiert werden, wobei der Mittelwert der gefilterten ersten Messung mit dem Faktor minus zwei gewichtet wird, und die Summe durch vier dividiert wird, und wobei unter Verwendung des Pseudodurchflussmesswerts ($g_n$) der Durchfluss des Mediums (10) bestimmt wird.

5. Verfahren nach einem der Ansprüche 1 bis 4, wobei zur Bestimmung der gemittelten ersten Messung ( $\overline{\overline{a}}$ ) und der gemittelten zweiten Messung ( $\overline{\overline{d}}$ ) jeweils ein arithmetischer oder ein kumulativer gleitender oder exponentieller gleitender Mittelwert bestimmt wird.

6. Verfahren nach Anspruch 5, wobei zur Bestimmung der gemittelten ersten Messung ( $\overline{\overline{a}}$ ) und der gemittelten zweiten Messung ( $\overline{\overline{d}}$ ) jeweils eine Kurvenanpassung mit einer Funktion an gemittelte Messpunkte der ersten Messung und an gemittelte Messpunkte der zweiten Messung durchgeführt wird und wobei vorzugsweise die Funktion eine exponentielle Funktion ist.

7. Verfahren nach Anspruch 6, wobei die Funktion für Diagnosezwecke verwendet wird.

8. Verfahren nach einem der Ansprüche 1 bis 7, wobei mit der Durchführung der ersten Messung ($\overline{a}_n$) in den ersten Teilintervallen (13) und der zweiten Messung ($\overline{d}_n$) in den zweiten Teilintervallen (14) jeweils nach einer Einschwingzeit ($t_E$) begonnen wird.

9. Verfahren nach einem der Ansprüche 1 bis 8, wobei die erste Sollmagnetfeldstärke ($B_1$) in den ersten Teilintervallen (13) und die zweite Sollmagnetfeldstärke ($B_2$) in den zweiten Teilintervallen (14) über der Zeit (t) konstant ist.

10. Verfahren zum Betreiben einer Abfüllanlage (1) mit einem magnetisch-induktiven Durchflussmessgerät (2, 17), einer Abfüllvorrichtung (3) und einer Steuerung (4, 18),

   wobei das magnetisch-induktive Durchflussmessgerät (4, 18), ein Messrohr (7), einen Magnetfeldgenerator (8) und zwei Messelektroden (9) aufweist,
   wobei die Abfüllvorrichtung (3) zum Abfüllen eines Mediums (10) durch das Messrohr (7) in Behälter (6) ausgebildet ist und
   wobei von der Steuerung (4, 18) ein Verfahren nach einem der Ansprüche 1 bis 8 ausgeführt wird und die Abfüllvorrichtung (3) unter Verwendung des bestimmten Durchflusses des Mediums (10) durch das Messrohr (7) angesteuert wird, sodass ein Behälter (6) mit einer vorgegebenen Menge des Mediums (10) befüllt wird.

11. Magnetisch-induktives Durchflussmessgerät (2, 17) mit einem Messrohr (7), einem Magnetfeldgenerator (8), zwei Messelektroden (9) und einer Steuerung (4, 18) und
   wobei die Steuerung (4, 18) ausgebildet ist, ein Verfahren nach einem der Ansprüche 1 bis 9 auszuführen.

12. Abfüllanlage (1) mit einem magnetisch-induktiven Durchflussmessgerät (2, 17), einer Abfüllvorrichtung (3) und einer Steuerung (4, 18),

   wobei das Durchflussmessgerät (2, 17), ein Messrohr (7), einen Magnetfeldgenerator (8) und zwei Messelektroden (9) aufweist,
   wobei die Abfüllvorrichtung (3) zum Abfüllen eines Mediums (10) durch das Messrohr (7) in Behälter (6) ausgebildet ist und
   wobei die Steuerung (4, 18) ausgebildet ist, ein Verfahren nach einem der Ansprüche 1 bis 9 auszuführen.

**Claims**

1. Method for determining a flow of a medium (10) with a magnetic-inductive flowmeter (2, 17),

   wherein the flowmeter (2, 17) comprises a measuring tube (7), a magnetic field generator (8), two measuring electrodes (9) and a controller (4, 18),

wherein a medium (10) is made to flow through the measuring tube (7),
wherein intervals (12) with first sub-intervals (13) and second sub-intervals (14) are generated by the controller (4, 18), and a magnetic field (15) alternating between a first setpoint magnetic field strength ($B_1$) in the first sub-intervals (13) and a second setpoint magnetic field strength ($B_2$) in the second sub-intervals (14) is generated by the magnetic field generator (8) so that a measuring voltage (u) present between the two measuring electrodes (9) is induced in the medium (10) flowing in the measuring tube (7),
wherein a first measurement ($\overline{a_n}$) with a measuring point number (M) of measuring points of the measuring voltage (u) in the first sub-intervals (13) and a second measurement ($\overline{d_n}$) with the measuring point number (M) of measuring points of the measuring voltage (u) in the second sub-intervals (14) is carried out by the controller (4, 18) in each of a measuring number (N) of the intervals (12)
wherein the following method steps are carried out by the controller (4, 18) at least for one of the intervals (12):

- determining an averaged first measurement ($\overline{\overline{a}}$) with a last averaged measurement point ($\overline{a_M}$) from a plurality of the first measurements, and determining an averaged second measurement ($\overline{\overline{d}}$) with a last averaged measurement point ($\overline{d_M}$) from a plurality of the second measurements,
- determining a normalized first measurement ($\overline{b_n}$) by subtracting the last averaged measurement point of the averaged first measurement from the averaged first measurement, and determining a normalized second measurement ($\overline{e_n}$) by subtracting the last averaged measurement point of the averaged second measurement from the averaged second measurement; and
- determining a filtered first measurement ($\overline{c_n}$) by subtracting the normalized first measurement from the first measurement, and determining a filtered second measurement ($\overline{f_n}$) by subtracting the normalized second measurement from the second measurement,

and wherein a flow rate of the medium (10) through the measuring tube (7) is determined by the controller (4, 18) using the filtered first measurements ($\overline{c_n}$) and the filtered second measurements ($\overline{f_n}$) determined at least for the one interval (12).

2. Method according to claim 1, wherein the filtered first measurement ($\vec{c}_{n-1}$) and/or filtered second measurement ($\vec{f}_{n-1}$) is determined by the controller (4, 18) also for the interval (12) preceding the interval (12) and the flow rate of the medium (10) is determined additionally using the filtered first and/or second measurement.

3. Method according to claim 2, wherein the filtered first measurement ($\vec{c}_{n-1}$) is determined by the controller (4, 18) also for the interval (12) preceding the interval (12), wherein a pseudo flow rate measurement value ($g_n$) is determined by respectively calculating a mean value from the filtered first measurement ($\overline{\overline{c}}_{n-1}$) preceding the filtered first measurement ($\overline{c_n}$), the filtered first measurement () and the filtered second measurement ($\overline{\overline{f}}_n$), these mean values are added, wherein the mean value of the filtered second measurement is weighted by a factor of minus two, and the sum is divided by four, and wherein the flow rate of the medium (10) is determined using the pseudo flow rate measurement value ($g_n$).

4. Method according to claim 2, wherein the filtered second measurement ($\vec{f}_{n-1}$) is determined by the controller also for the interval (12) preceding the interval (12), wherein a pseudo flow rate measurement value ($g_n$) is determined by respectively calculating a mean value from the filtered second measurement ($\overline{\overline{f}}_{n-1}$) preceding the filtered second measurement ($\overline{f_n}$), the filtered second measurement ($\overline{\overline{f}}_n$) and the filtered first measurement ($\overline{\overline{c}}_n$), these mean values are added, wherein the mean value of the filtered first measurement is weighted by a factor of minus two, and the sum is divided by four, and the flow rate of the medium (10) is determined using the pseudo flow rate measurement value ($g_n$).

5. Method according to any one of claims 1 to 4, wherein an arithmetic or a cumulative moving or exponential moving average is determined for determining the averaged first measurement ($\overline{\overline{a}}$) and the averaged second measurement ($\overline{\overline{d}}$), respectively.

6. Method according to claim 5, wherein, for determining the averaged first measurement ($\overline{\overline{a}}'$) and the averaged second measurement ($\overline{\overline{d}}'$) in each case, a curve fitting is carried out with a function to averaged measurement points of the first measurement and to averaged measurement points of the second measurement and wherein preferably the function is an exponential function.

7. Method according to claim 6, wherein the function is used for diagnostic purposes.

8. Method according to any one of claims 1 to 7, wherein the execution of the first measurement ($\overline{a}_n$) in the first sub-intervals (13) and of the second measurement ($\overline{d}_n$) in the second sub-intervals (14) is respectively started after a settling time ($t_E$).

9. Method according to any one of claims 1 to 8, wherein the first setpoint magnetic field strength ($B_1$) in the first sub-intervals (13) and the second setpoint magnetic field strength ($B_2$) in the second sub-intervals (14) is constant over time (t).

10. Method for operating a filling system (1) having a magnetic-inductive flowmeter (2, 17), a filling device (3) and a controller (4, 18),

   wherein the magnetic-inductive flowmeter (4, 18), comprises a measuring tube (7), a magnetic field generator (8) and two measuring electrodes (9),
   wherein the filling device (3) is designed for filling a medium (10) through the measuring tube (7) into containers (6), and
   wherein a method according to any one of claims 1 to 8 is carried out by the controller (4, 18) and the filling device (3) is controlled using the determined flow rate of the medium (10) through the measuring tube (7) so that a container (6) is filled with a predetermined amount of the medium (10).

11. Magnetic-inductive flowmeter (2, 17) comprising a measuring tube (7), a magnetic field generator (8), two measuring electrodes (9) and a controller (4, 18), and
   wherein the controller (4, 18) is designed to carry out a method according to any one of claims 1 to 9.

12. Filling system (1) with a magnetic-inductive flowmeter (2, 17), a filling device (3) and a controller (4, 18),

   wherein the flowmeter (2, 17), has a measuring tube (7), a magnetic field generator (8) and two measuring electrodes (9),
   wherein the filling device (3) is designed for filling a medium (10) through the measuring tube (7) into containers (6), and
   wherein the controller (4, 18) is designed to carry out a method according to any one of claims 1 to 9.


**Revendications**

1. Procédé de détermination d'un débit d'un fluide (10) avec un débitmètre magnéto-inductif (2, 17),

   le débitmètre magnéto-inductif (2, 17) comportant un tube de mesure (7), un générateur de champ magnétique (8), deux électrodes de mesure (9) et un dispositif de commande (4, 18),
   un fluide (10) étant amené à s'écouler à travers le tube de mesure (7),
   des intervalles (12) étant générés par le dispositif de commande (4, 18) avec des premiers sous-intervalles (13) et des deuxièmes sous-intervalles (14), et un champ magnétique alternatif (15) étant généré au moyen du générateur de champ magnétique (8) entre une première intensité de champ magnétique théorique ($B_1$) dans les premiers sous-intervalles (13) et une deuxième intensité de champ magnétique théorique ($B_2$) dans le deuxième sousintervalle (14), de sorte qu'une tension de mesure (u) entre les deux électrodes de mesure (9) soit induite dans le milieu (10) qui circule dans le tube de mesure (7),
   le dispositif de commande (4, 18), dans chacun d'un nombre de mesures (N) des intervalles (12) dans les premiers sous-intervalles (13), effectuant une première mesure ($\overline{a}_n$) comprenant un nombre de points de mesure (M) des points de mesure de la tension de mesure (u) et, dans les deuxième sous-intervalles (14), effectuant une deuxième mesure ($\overline{d}_n$) comprenant le nombre de points de mesure (M) des points de mesure de la tension de mesure (u),
le dispositif de commande (4, 18) exécutant les étapes suivantes pour au moins l'un des intervalles (12) :

- détermination d'une première mesure moyenne ($\vec{\overline{a}}$) avec un dernier point moyen ($\overline{a_M}$) à partir de plusieurs des premières mesures et détermination d'une deuxième mesure moyenne (d) avec un dernier point moyen ($\overline{d_M}$) à partir de plusieurs des deuxièmes mesures,
- détermination d'une première mesure normalisée ($\overline{b}_n$) en soustrayant le dernier point de mesure moyen de la première mesure moyenne à la première mesure moyenne et détermination d'une deuxième mesure normalisée ($\overline{e}_n$) en soustrayant le dernier point de mesure moyen de la deuxième mesure moyenne à la deuxième mesure moyenne et
- détermination d'une première mesure filtrée ($\overline{c}_n$) en soustrayant la première mesure normalisée à la première mesure et détermination d'une deuxième mesure filtrée ($\overline{f}_n$) en soustrayant la deuxième mesure normalisée à la deuxième mesure,

et le dispositif de commande (4, 18) déterminant un débit du milieu (10) à travers le tube de mesure (7) en utilisant les premières mesures filtrées ($\overline{c}_n$) et les deuxièmes mesures filtrées ($\overline{f}_n$) déterminées au moins pour ledit un intervalle (12).

2. Procédé selon la revendication 1, dans lequel le dispositif de commande (4, 18) détermine également la première mesure filtrée ($\overline{c}_{n-1}$) et/ou la deuxième mesure filtrée ($\overline{f}_{n-1}$) pour l'intervalle (12) qui précède l'intervalle (12), et détermine le débit du milieu (10) en utilisant en outre la première et/ou la deuxième mesure filtrée.

3. Procédé selon la revendication 2, dans lequel le dispositif de commande (4, 18) détermine également la première mesure filtrée ($\overline{c}_{n-1}$) pour l'intervalle (12) qui précède l'intervalle (12), une valeur de pseudo-débit ($g_n$) étant déterminée en déterminant respectivement une moyenne à partir de la première mesure filtrée ($\vec{\overline{c}}_{n-1}$), de la première mesure filtrée ($\vec{\overline{c}}_n$) et de la deuxième mesure filtrée ($\vec{\overline{f}}_n$) qui précèdent la première mesure filtrée ($\overline{c}_n$), ces moyennes étant additionnées, la moyenne de la deuxième mesure filtrée étant pondérée par le facteur moins deux, et la somme étant divisée par quatre, et le débit du milieu (10) étant déterminé par utilisation de la valeur de pseudo-débit ($g_n$).

4. Procédé selon la revendication 2, dans lequel le dispositif de commande détermine également pour l'intervalle (12) qui précède l'intervalle (12) la deuxième mesure filtrée ($\overline{f}_{n-1}$), une valeur de pseudo-débit ($g_n$) étant déterminée en déterminant respectivement une moyenne à partir de la deuxième mesure filtrée ($\vec{\overline{f}}_{n-1}$), de la deuxième mesure filtrée ($\overline{f}_n$) et de la première mesure filtrée ($\overline{c}_n$) qui précèdent la deuxième mesure filtrée ($\overline{f}_n$), ces moyennes étant additionnées, la moyenne de la première mesure filtrée étant pondérée par le facteur moins deux, et la somme étant divisée par quatre, et le débit du milieu (10) étant déterminé par utilisation de la valeur de pseudo-débit ($g_n$).

5. Procédé selon l'une des revendications 1 à 4, dans lequel, pour déterminer la première mesure moyenne ($\vec{\overline{a}}$) et la deuxième mesure moyenne (d), une moyenne arithmétique ou glissante cumulée ou glissante exponentielle est respectivement déterminée.

6. Procédé selon la revendication 5, dans lequel, pour déterminer la première mesure moyenne ($\vec{\overline{a}}$) et la deuxième mesure moyenne ($\vec{\overline{d}}$), un ajustement de courbe à l'aide d'une fonction est effectué sur des points de mesure moyens de la première mesure et sur des points de mesure moyens de la deuxième mesure, la fonction étant de préférence une exponentielle.

7. Procédé selon la revendication 6, dans lequel la fonction est utilisée à des fins de diagnostic.

8. Procédé selon l'une des revendications 1 à 7, dans lequel on commence par effectuer la première mesure ($\overline{a}_n$) dans les premiers sous-intervalles (13) et la deuxième mesure ($\overline{d}_n$) dans les deuxièmes sous-intervalles (14) respectivement après un temps de stabilisation ($t_E$).

9. Procédé selon l'une des revendications 1 à 8, dans lequel la première intensité de champ magnétique théorique ($B_1$) est constante dans les premiers sous-intervalles (13) et la deuxième intensité de champ magnétique théorique ($B_2$) est constante dans les deuxièmes sous-intervalles (14) au cours du temps (t).

10. Procédé d'exploitation d'une installation de remplissage (1) comprenant un débitmètre magnéto-inductif (2, 17), un dispositif de remplissage (3) et un dispositif de commande (4, 18),

   le débitmètre magnéto-inductif (4, 18) comportant un tube de mesure (7), un générateur de champ magnétique (8) et deux électrodes de mesure (9),
   le dispositif de remplissage (3) étant conçu pour remplir un réservoir (6) d'un milieu (10) à travers le tube de mesure (7) et
   le dispositif de commande (4, 18) mettant en œuvre un procédé selon l'une des revendications 1 à 8 et le dispositif de remplissage (3) étant commandé par utilisation du débit déterminé du milieu (10) à travers le tube de mesure (7), de sorte qu'un réservoir (6) est rempli d'une quantité prédéterminée de milieu (10).

11. Débitmètre magnéto-inductif (2, 17) comprenant un tube de mesure (7), un générateur de champ magnétique (8), deux électrodes de mesure (9) et un dispositif de commande (4, 18),
   le dispositif de commande (4, 18) étant conçu pour mettre en œuvre un procédé selon l'une des revendications 1 à 9.

12. Installation de remplissage (1) comprenant un débitmètre magnéto-inductif (2, 17), un dispositif de remplissage (3) et un dispositif de commande (4, 18),

   le débitmètre (2, 17) comportant un tube de mesure (7), un générateur de champ magnétique (8) et deux électrodes de mesure (9),
   le dispositif de remplissage (3) étant conçu pour remplir un réservoir (6) d'un milieu (10) à travers le tube de mesure (7) et
   le dispositif de commande (4, 18) étant conçu pour mettre en œuvre un procédé selon l'une des revendications 1 à 9.

Fig. 1

Fig. 2

Fig. 3a

Fig. 3b

Fig. 3c

EP 4 296 629 B1

Fig. 4

**EP 4 296 629 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1363108 B1